# EUROPEAN PATENT APPLICATION

(11) **EP 3 199 456 A1**
(43) Date of publication of application: **02.08.2017**
(21) Application number: 17153105.6
(22) Date of filing: 25.01.2017
(51) Int. Cl.: B64D 13/06

(54) **AIRCRAFT THERMAL MANAGEMENT SYSTEM**

(30) Priority: 01.02.2016 US 201615011933
(71) Applicant: General Electric Company, Schenectady, NY 12345 (US)
(72) Inventor: HINDERLITER, Kevin Edward, Cincinnati, OH 45215 (US)
(74) Representative: Lee, Brenda

(57) **Abstract**

A thermal management system (20) for an aircraft is provided. The thermal management system (20) may comprise a first vapor compression circuit (44), a second vapor compression circuit (46), and an intercooler (58). The first vapor compression circuit (44) may define a first flowpath for fluid compression, condensation, expansion, and evaporation. The second vapor compression circuit (46) may define a second flowpath for fluid compression, condensation, expansion, and evaporation. The intercooler (58) may be disposed in cascading thermal communication between the first vapor compression circuit (44) and the second vapor compression circuit (46). Generally, heat generated by the aircraft may be transferred to the first vapor compression circuit (44) during aircraft operation.

## Description

### FIELD OF THE INVENTION

The present subject matter relates generally to aircrafts, and more particularly, to thermal management systems for aircrafts.

### BACKGROUND OF THE INVENTION

As aircrafts have advanced, they have become increasingly reliant on various electronics to manage subsystems and operations of the aircraft. With this increased reliance, the number of electronic components within modem aircrafts has proliferated. Although the proliferation of electronic components has brought a number of improvements, it has also increased the amount of heat generated within and about an aircraft's various components. The demands of aircraft cooling systems have, likewise, increased. The cooling demands are only expected to increase in the future. It is expected that future aircraft will require megawatt (MW) levels of cooling instead of kilowatt (KW) levels required by current aircrafts. However, existing cooling systems will be unable to handle such high loads.

Moreover, as the number of electronic components within an aircraft increases, the variation in cooling demands is likely to increase. Some electronic components may only operate intermittently or under certain conditions. In addition, the operational heat output of various electronic components may vary over time or in response to select operations. These and other factors will affect the amount of heat generated by the aircraft and, in turn, the cooling demands thereof. As a result, the cooling demands of the aircraft may be vastly different at one time than they are at another time. Excessive cooling at times when heat output is relatively low may result in system inefficiencies. Over time, excessive cooling may even cause damage to the aircraft's electronic components.

Accordingly, further improvements to aircraft thermal management are desired. In particular, there is a need for an aircraft thermal management system that can meet the increasingly high cooling demands of future aircrafts. It may also be advantageous to provide an aircraft thermal management system that can vary the amount of heat absorbed by the system.

### BRIEF DESCRIPTION OF THE INVENTION

Aspects and advantages of the invention will be set forth in part in the following description, or may be obvious from the description, or may be learned through practice of the invention.

In one aspect of the present disclosure, a thermal management system for an aircraft is provided. The thermal management system may comprise a first vapor compression circuit, a second vapor compression circuit, and an intercooler. The first vapor compression circuit may define a first flowpath for fluid compression, condensation, expansion, and evaporation. The second vapor compression circuit may define a second flowpath for fluid compression, condensation, expansion, and evaporation. The intercooler may be disposed in cascading thermal communication between the first vapor compression circuit and the second vapor compression circuit. Heat generated by the aircraft may be transferred to the first vapor compression circuit during aircraft operation.

In another aspect of the present disclosure, a thermal management system for an aircraft is provided. The thermal management system may comprise a first vapor compression circuit, a second vapor compression circuit, an intercooler, and a fluid compression circuit. The first vapor compression circuit may define a first flowpath for fluid compression, condensation, expansion, and evaporation. The second vapor compression circuit may define a second flowpath for fluid compression, condensation, expansion, and evaporation. The intercooler may be disposed in cascading thermal communication between the first vapor compression circuit and the second vapor compression circuit. The fluid compression circuit may include a heat sink disposed in thermal communication with the second vapor compression circuit.

In yet another aspect of the present disclosure, an aircraft thermal management system is provided. The aircraft thermal management system may comprise a core turbine engine, an electronic aircraft component operably coupled to the core turbine engine, a first vapor compression circuit, a second vapor compression circuit, and an intercooler. The core turbine engine may define a central axis and include a shaft extending along the central axis, a compressor coupled to the shaft, a combustion section positioned downstream of the compressor to receive a compressed fluid therefrom, and a turbine positioned downstream of the combustion section and coupled to the shaft to transfer rotation to the compressor. The first vapor compression circuit may define a first flowpath for fluid compression, condensation, expansion, and evaporation. The second vapor compression circuit may define a second flowpath for fluid compression, condensation, expansion, and evaporation. The intercooler may be disposed in cascading thermal communication between the first vapor compression circuit and the second vapor compression circuit. Heat generated by the aircraft may be transferred to the first vapor compression circuit during aircraft operation.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention directed to one of ordinary skill in the art, is set forth in the specification, which makes reference to the appended figures, in which:
FIG. 1 provides a schematic view of an exemplary gas turbine engine powered aircraft in accordance with one or more embodiments of the present disclosure;
FIG. 2 provides a schematic view of an exemplary thermal management system embodiment in accordance with one or more embodiments of the present disclosure; and
FIG. 3 provides a schematic view of another exemplary thermal management system embodiment in accordance with one or more embodiments of the present disclosure.

Repeat use of reference characters in the present specification and drawings is intended to represent the same or analogous features or elements of the present invention.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first," "second," and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The present disclosure provides a thermal management system for an aircraft. Generally, a first cooling circuit may be provided on an aircraft. The first cooling circuit may be disposed on or near a heat-generating aircraft feature. During operation of the aircraft, the first cooling circuit may draw heat from the heat-generating feature and transport it to another portion of the cooling circuit. Additional cooling circuits may be connected to the first cooling circuit in a cascading configuration to similarly draw heat from the first cooling circuit.

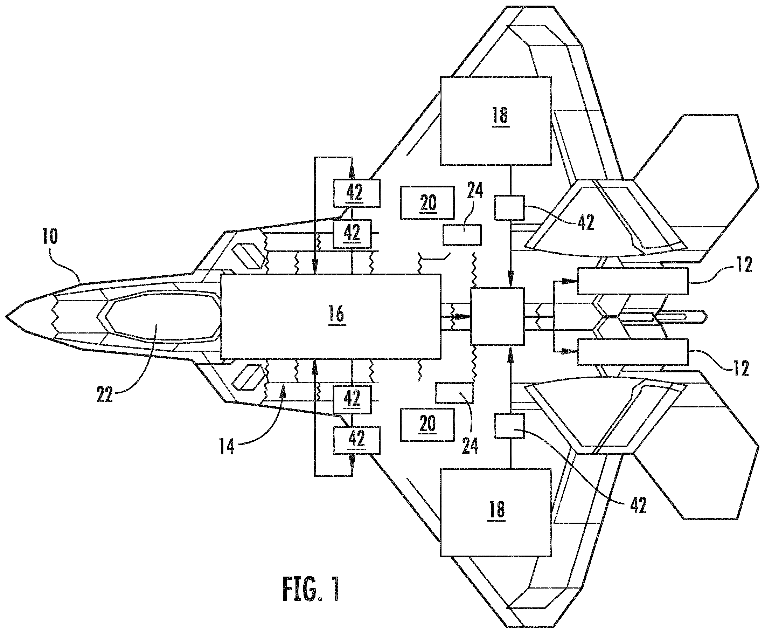

Turning now to the figures, FIG. 1 illustrates an exemplary aircraft 10, such as the F-22, having two turbofan aircraft gas turbine engines 12. A fuel system 14 may generally be provided for supplying fuel to the aircraft engines 12. In the illustrated embodiment of FIG. 1, the fuel system 14 includes an internal fuel tank 16 and two wet wing fuel tanks 18 aft of the cabin for storing aircraft fuel. Generally, the wet wing fuel tanks 18 will be understood to be housed within the aircraft wings and subject to cooling and heating of ambient air through which the aircraft 10 flies.

As illustrated, a thermal management system 20 is also disposed within the aircraft 10. Generally, the thermal management system 20 may be configured to provide cooling for one or more aircraft components, as well as thermal control and pressurization for the cockpit 22. Although the following discussion will be primarily directed at the illustrated embodiments, it is envisioned that the disclosed subject matter could be equally applied to other aircraft embodiments, such as those including one or more turboprop, turbojet, turboshaft, or open rotor gas turbine engine.

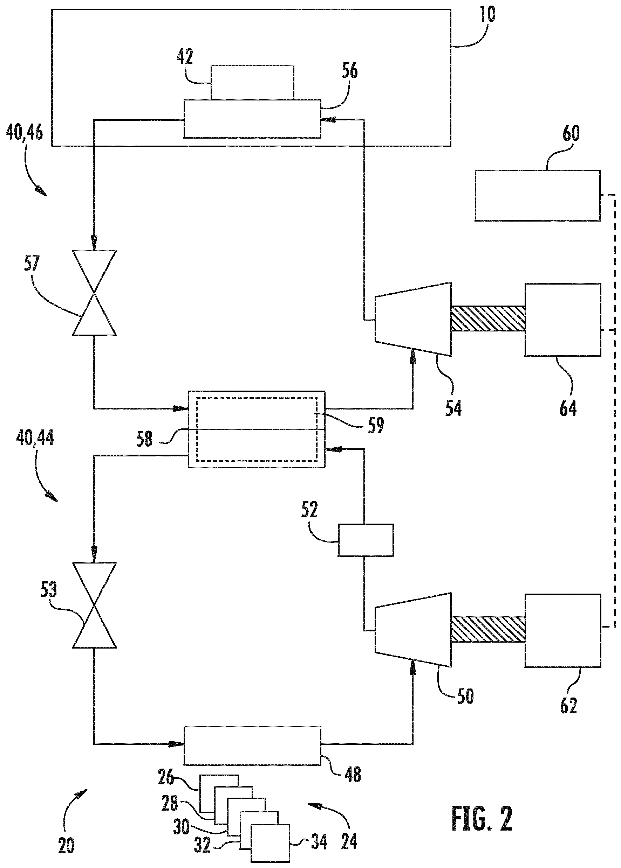

As shown in FIGS. 1 and 2, the thermal management system 20 is disposed in thermal communication with one or more electronic aircraft components 24. For instance, the electronic aircraft components 24 of some embodiments include one or more of a communications system 26, radar 28, alternating current (A/C) aircraft electronics 30, flight control system 32, and/or electro-optic system 34. Additional or alternative embodiments may include other electronic aircraft components, such as a fly-by-wire (FBW) control system, directed energy weapons (DEW), onboard inert gas generation system (OBIGGs), onboard oxygen gas generation systems (OBOGS), environmental control system (ECS), inverter converter controller (ICC), thermal storage (e.g., phase change material) or chilled fuel tank, electrical power generating systems, gear box lubrication systems, or another avionic system.

Generally, the thermal management system 20 includes at least two cooling circuits 40 circulating one or more heat transfer fluids. During operation of the aircraft 10, the heat transfer fluid(s) may be recirculated past the electronic aircraft components 24, drawing heat and providing selective cooling thereto. As illustrated in FIG. 2, the cooling circuits 40 are thermally cascaded with each other. Heat drawn from the electronic aircraft components 24 is transferred sequentially from one cooling circuit 40 to the next. In this manner, the overall heat drawn through the system 20 may increase as thermal energy is transferred to sequential cooling circuits 40. Optionally, heat may pass generally step-wise through each cooling circuit 40 before being exhausted at one or more heat sinks 42 within the aircraft 10. Although a heat sink 42 is illustrated within the passage of the fuel system 14 of FIG. 1, additional or alternative embodiments of the heat sink 42 may be disposed in another fluid passage of the aircraft 10, e.g., a bypass airflow passage or ram airflow passage.

In some embodiments, the cooling circuits 40 may include one or more vapor compression circuits. In the exemplary embodiment of FIG. 2, the thermal management system 20 includes a first vapor compression circuit or system (first VCS) 44 and a second vapor compression circuit or system (second VCS) 46. Generally, the vapor compression circuits 44, 46 each define a flowpath (e.g., the loop by which fluid travels through each circuit) for sequential compression, condensation, expansion, and evaporation of a fluid therein. The illustrated first VCS 44 includes an evaporator 48, a compressor 50, an auxiliary condenser 52, and an expansion valve 53 in fluid series communication. Although a single evaporator 48 and expansion valve 53 are illustrated, multiple evaporators and/or expansion valves may be included at each respective location. The illustrated second VCS 46 includes a compressor 54, a primary condenser 56, and an expansion valve 57 in fluid series communication. Although a single condenser 56 and expansion valve 57 are illustrated, multiple condensers and/or expansion valves may be included at each respective location. A VCS intercooler 58 is disposed between the first VCS 44 and the second VCS 46 to define a thermal connection and cascade heat from one cooling circuit 40 to the next.

Each of the first VCS 44 and the second VCS 46 includes a heat transfer fluid to be circulated therethrough. For example, the heat transfer fluid may include a refrigerant, such as R-134a. The heat transfer fluid through each VCS 44, 46 may be substantially the same, or may include a separate and discrete refrigerant. Optionally, each of the first VCS 44 and the second VCS 46 may be configured as a closed cooling circuit 40. The heat transfer fluid through one VCS 44 or 46 would, thus, not pass to the other VCS 46 or 44 during normal cooling operations.

In some embodiments, a controller 60 is provided to control one or more operational parameters of the thermal management system 20, e.g., the flow of heat transfer fluid through each cooling circuit 40. The controller 60 may include one or more discrete processors, memory units, and power storage units (not pictured). The processor may also include a digital signal processor (DSP), an application specific integrated circuit (ASIC), a field programmable gate array (FPGA) or other programmable logic device, discrete gate or transistor logic, discrete hardware components, or any combination thereof designed and programmed to perform or cause the performance of the functions described herein. The processor may also include a microprocessor, or a combination of the aforementioned devices (e.g., a combination of a DSP and a microprocessor, a plurality of microprocessors, one or more microprocessors in conjunction with a DSP core, or any other such configuration).

Additionally, the memory device(s) may generally comprise memory element(s) including, but not limited to, computer readable medium (e.g., random access memory (RAM)), computer readable non-volatile medium (e.g., a NVRAM, flash memory, EEPROM, or FRAM), a compact disc-read only memory (CD-ROM), a magnetooptical disk (MOD), a digital versatile disc (DVD), and/or other suitable memory elements. The memory can store information accessible by the processor(s), including instructions that can be executed by the processor(s). For example, the instructions can be software or any set of instructions that, when executed by the processor(s), cause the processor(s) to perform operations. Optionally, the instructions may include a software package configured to operate the thermal management system 20 to, e.g., execute one or more operating methods.

As noted above, the first VCS 44 circulates a heat transfer fluid through one or more evaporators 48, a compressor 50, one or more auxiliary condensers 52, a VCS intercooler 58, and one or more expansion valves 53. In the exemplary embodiment of FIG. 2, the evaporator(s) 48 of the first VCS 44 is positioned in thermal communication with the electronic aircraft components 24. The evaporator(s) 48 may be disposed adjacent to the electronic aircraft components 24 to absorb a substantial amount of heat therefrom. Optionally, a thermal connection may be provided by direct or indirect contact with the electronic components 24. For instance, a heat exchanger (not pictured) may be disposed between the electronic components 24 and the evaporator(s) 48 to conduct heat from the electronic components to the evaporator(s) 48. Moreover, thermal paste or an intermediate circuit having coolant, such as PAO (PolyAlphaOlefins) or other glycolic blends, may be provided between the evaporator(s) 48 and the electronic components 24 to further facilitate the rapid transfer of heat. During operation of the aircraft 10, heat from the electronic components 24 or ambient environment vaporizes the heat transfer fluid enclosed within the evaporator(s) 48.

Once the heat transfer fluid is vaporized within the evaporator(s) 48 of the first VCS 44, the heat transfer fluid passes downstream to the compressor 50. As shown, the compressor 50 may include an electric motor 62, to drive the rotation of the compressor 50, and thereby motivate circulation of the heat transfer fluid. In other embodiments, the rotation of the compressor 50 is driven by a motive airflow. For instance, the motive airflow may be provided by bleed air from one or more gas turbine engines. During operation of the compressor 50, bleed air may be selectively directed to the compressor 50 to drive rotation thereof.

In certain embodiments of the first VCS 44, the compressor 50 is disposed in operable communication with the controller 60. In such embodiments, one or more signals from the controller 60 may be provided in order to selectively operate the rotation of the compressor 50. For instance, in the exemplary embodiment of FIG. 2, an electric connection is established between the controller 60 and the electric motor 62 of the first VCS compressor 50. An activation signal from the controller 60 may be provided to initiate rotation of the compressor 50 according to the desired heat transfer or flowrate of heat transfer fluid through the first VCS 44.

Upon passing through the compressor 50, the heat transfer fluid is directed to the downstream VCS intercooler 58 and one or more auxiliary condensers 52 as a superheated vapor. In the illustrated embodiment of FIG. 2 the VCS intercooler 58 is provided in a counter-flow (could be any flow configuration), non-mixed embodiment. As a result, the flow direction of the first VCS's heat transfer fluid through the VCS intercooler 58 is shown to be opposite of the flow direction of the second VCS's heat transfer fluid through the VCS intercooler 58. Discrete flow channels are provided for the first VCS 44 and the second VCS 46. Heat may be transferred to the second VCS 46 directly through, e.g., a conductive frame; or indirectly through, e.g., an intermediate fluid 59 enclosed within the VCS intercooler 58. Moreover, alternative embodiments of the VCS intercooler 58 may be provided wherein the flow of heat transfer fluid through the VCS intercooler 58 takes another suitable path.

In certain embodiments, auxiliary condenser 52 is disposed in thermal communication with a heat sink in direct or indirect communication with 42 of the fuel system 14 (see FIG. 1). Fuel to the engines (or recirculated through the fuel system 14) may, thus, absorb a portion of the heat passing through the auxiliary condenser 52. Additional or alternative embodiments of the auxiliary condenser 52 may be disposed in thermal communication with a portion of a gas turbine engine 12 (see FIG. 1), e.g., an engine airflow passage or engine fuel passage (indirect or direct communication).

Within the VCS intercooler 58 and auxiliary condenser 52, the vaporized heat transfer fluid may condense as heat is drawn therefrom. Generally, heat passing from the VCS intercooler 58 will be absorbed into the second VCS 46, while heat passing from the auxiliary condenser 52 will pass to the ambient environment or another portion of the aircraft 10.

After exiting from the auxiliary condenser 52 and the VCS intercooler 58, the heat transfer fluid may pass, largely liquefied, to the expansion valve(s) 53. The expansion valve(s) 53 may include a mechanical or electric valve to selectively release heat transfer fluid mass flow. The release temperature may be predetermined selectively provided or controlled through feedback control. Optionally, the expansion valve(s) 53 may be provided in operable communication with the controller to determine or vary the metering of the heat transfer fluid. During operation of the thermal management circuit 20, heat transfer fluid may be metered through the expansion valve(s) 53, dropping in pressure before being returned to the evaporator(s) 48 as a vapor-liquid mixture.

Turning now to the second VCS 46, it will be understood that the operation of the second VCS 46 may be similar to that of the first VCS 44, except as otherwise indicated. Generally, the second VCS 46 circulates a heat transfer fluid through the VCS intercooler 58, a compressor 54, one or more condensers 56, and one or more expansion valves 57. As previously described, heat transfer fluid within the VCS intercooler 58 may absorb heat transferred from the first VCS 44. During some operations, heat passing through the VCS intercooler 58 may serve to vaporize the heat transfer fluid of the second VCS 46.

Once the heat transfer fluid is vaporized within the VCS intercooler 58, the heat transfer fluid may pass downstream to the compressor 54 of the second VCS 46. As shown, the compressor 54 may include an electric motor 64 to drive the rotation of the compressor 54, and thereby motivate circulation and pressurization of the heat transfer fluid. In other embodiments, the rotation of the compressor 54 is driven by a motive airflow, as described above.

In certain embodiments of the second VCS 46, the compressor 54 is disposed in operable communication with the controller 60. In some such embodiments, one or more signals from the controller 60 may be provided in order to selectively operate the rotation of the compressor 54. For instance, in the exemplary embodiment of FIG. 2, an electrical connection is established between the controller 60 and the electric motor 64 of the second VCS 46 compressor 54. An activation signal from the controller 60 may be provided to initiate rotation of the compressor 54 according to the desired heat transfer or flowrate of heat transfer fluid through the second VCS 46.

The compressors 50, 54 of the first VCS 44 and second VCS 46 may be configured to operate independently or in synchronization with each other. Optionally, the controller 60 may be configured to selectively operate each compressor 50, 54 independently. In certain embodiments, multiple unique operating modes may be provided. In such embodiments, the controller may selectively initiate each mode, e.g., upon receiving a user selected input or determination of a condition-dependent event.

In some embodiments, a synchronized mode and a condition-dependent mode may be provided. In the synchronized mode, the controller 60 may initiate activation of each compressor 50, 54 at a set compression or rate of rotation. The compression or rotation rate of each compressor 50, 54 may be identical or distinct. In the condition-dependent mode, the controller 60 may initiate activation of each compressor 50, 54 separately according to an input condition. The input condition may be determined by the controller 60 based, at least in part, on a received input signal. For instance, the input signal may include a temperature signal from one or more temperature sensors (not pictured) of the electronic aircraft components 24. Each compressor 50, 54 may be activated at a certain temperature signal value or limit. In certain embodiments, the condition-dependent mode may include activating the first compressor 50 at a first temperature signal limit, and activating the second compressor 54 at a second temperature signal limit. Optionally, the second temperature signal limit may be greater than the first temperature signal limit. Advantageously, the independent circulation of the first VCS 44 and the second VCS 46 may provide suitable cooling without wasting energy operating unnecessary components.

Returning to the second VCS 46, upon passing through the compressor 54, the heat transfer fluid may be directed to the downstream condenser(s) 56 as a superheated vapor. At least one primary condenser 56 may be disposed in thermal communication with a portion of the aircraft 10, e.g., a heat sink 42 (see FIG. 1). Generally, heat passing from the primary condenser 56 will be absorbed by a portion of the aircraft 10. Optionally, heat may pass from an additional condenser at 56 to the ambient environment or another portion of the aircraft 10.

In optional embodiments, the primary condenser 56 and/or one or more auxiliary condensers are positioned in thermal communication with an additional cooling loop as a heat exchanger. For instance, the primary condenser 56 may be positioned within a recirculation loop of the fuel system 14 (see FIG. 1), attached to a heat sink 42 (see FIG. 1). Although the primary condenser 56 shares a thermal connection with the fuel system 14, it may be configured to fluidly isolate the flow of fuel and the flow of heat transfer fluid. Fuel circulated past the primary condenser 56 may, thus, absorb heat from the heat transfer fluid without physically mixing the two together. Additional or alternative embodiments of the condenser(s) 56 and may be disposed in thermal communication with a portion of a gas turbine engine 12 (see FIG. 1), e.g., an engine airflow passage or engine fuel passage. Within the condenser(s) 56, the heat transfer fluid may condense as heat is drawn therefrom.

After exiting from the condenser(s) 56, the heat transfer fluid may pass, largely liquefied, to the expansion valve(s) 57. The expansion valve(s) 57 may include a mechanical or electric valve to selectively release heat transfer fluid at a set mass flow rate. The flow rate may be predetermined selectively provided, or controlled through electronic or electrical feedback control. Optionally, the expansion valve(s) 57 may be provided in operable communication with the controller 60 to determine or vary the metering of the heat transfer fluid. During operation of the thermal management circuit 20, heat transfer fluid may be metered through the expansion valve(s) 57, dropping in pressure before being returned to the VCS intercooler 58 as a vapor-liquid mixture.

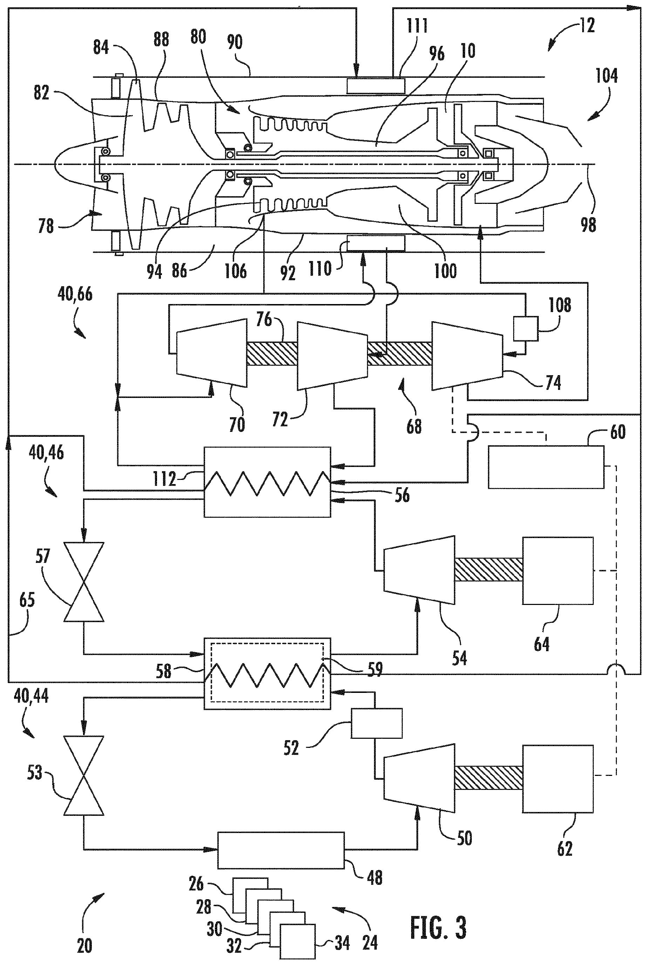

Turning now to FIG. 3, a further exemplary embodiment is illustrated. Generally, it will be understood that the embodiment of FIG. 3 is similar to the embodiment of FIG. 2, except as otherwise indicated. For instance, the embodiment of FIG. 3 includes three cooling circuits 40. In addition to the cascaded first VCS 44 and second VCS 46, the embodiment of FIG. 3 includes an air cycle circuit or system (ACS) 66 disposed in cascading thermal communication with the second VCS 46. In other embodiments, additional or alternative fluid compression circuits (e.g., a third VCS or second ACS) may be provided in cascading thermal communication with the rest of the thermal management system 20.

Moreover, an intermediate fluid circuit 65 is provided in thermal communication with one or more the cooling circuits 44 and 46 to draw heat therefrom. Optionally, the intermediate fluid circuit 65 may extend across the intercooler 58 and/or evaporator 56 as a closed-circuit loop for transferring heat therefrom. Furthermore, the intermediate fluid circuit 65 may include one or more heat sink 111 at one or more locations. For instance, the heat sink 111 may be positioned within a FLADE duct 84, a bypass airflow passage, ram airflow passage, or the fuel system (e.g., 42, see FIG. 1). Optionally, one or more pump (not pictured) may be provided in operable communication with the controller 60 to control the flow of fluid through the intermediate fluid circuit. Alternatively, the intermediate fluid circuit may be configured as a passive thermal transport bus, free of any additional pump structure to conduct heat therethrough. The fluid within the intermediate cooling circuit may include a suitable cooling fluid, such as PAO, water, or a silicone-based fluid. It should be noted that although the intermediate fluid circuit 65 is illustrated with respect to FIG. 3, a similar circuit may be provided to additional embodiments, including the embodiment of FIG. 2.

As shown in FIG. 3, the ACS 66 includes an air cycle machine (ACM) 68 having an air compressor 70, a cooling turbine 72, and a power turbine 74 fixed on a common rotational shaft 76. The power turbine 74 is operably attached to each of the air compressor 70, cooling turbine 72, and shaft 76 to simultaneously drive rotation thereof. Generally, the ACM 68 is disposed in operable communication with at least one gas turbine engine 12. Although not pictured in the figures, it is understood that certain embodiments of the ACS 66 may optionally include additional compression and or expansion stages, as well as a water extraction system.

In the illustrated embodiment, the gas turbine engine 12 includes a fan on blade (FLADE) turbofan engine having a fan section 78 and a core turbine engine 80 disposed downstream from the fan section 78. The fan section 78 includes a plurality of inner fan blades 82 and outer fan blades 84. The outer fan blades being 84 disposed within a FLADE duct 86, which is generally co-annular with an inner fan duct 88. A fan casing 90, may extend over an outer portion of the core engine 14 so as to define the FLADE duct 86, or a by-pass airflow passage, that provides additional propulsive jet thrust. An outer casing 92 encloses, in serial flow relationship, a compressor section including an engine compressor 94 mounted to an engine shaft 96 along a central axis 98; a combustion section 100 that receives a compressed airflow from the engine compressor 94; a turbine section including a high pressure (HP) engine turbine 102 joined to the engine shaft 96; and a jet exhaust nozzle section 104. Combustion gases exiting the combustion section 100 drive rotation of the HP engine turbine 102, which in turn drives the engine compressor 94. It should be noted, that although the illustrated gas turbine engine embodiment provides a FLADE duct, the current disclosure is not limited to such embodiments. For instance, certain embodiments may be provided within another gas turbine configuration, including, but not limited to, a high-bypass turbofan, turboprop, turboshaft, or open rotor engine configuration.

In some embodiments, an engine bleed line is provided in selective fluid communication between a portion of the engine 12, e.g., the compressor section, and the power turbine 74. Optionally, the controller 60 may dictate the flow of bleed air to control rotation of the ACM 68. In such embodiments, the ACM 68 may be in operable communication with the controller 60 at, for instance, the power turbine 74. In the exemplary embodiment of FIG. 3, an engine bleed line 106 selectively provides bleed air to the ACM 68 at the power turbine 74 and the air compressor 70. During operation of the ACS 66, bleed air from the engine 12 motivates rotation of the power turbine 74, which subsequently drives rotation of the air compressor 70 and cooling turbine 72. As noted above, each of the air compressor 70, cooling turbine 72, and power turbine 74 of the illustrated embodiment are attached via the rotational shaft 76. During operation, rotation at one of the air compressor 70, cooling turbine 72, or power turbine 74 is transferred to the remaining elements through the rotational shaft 76.

In further embodiments, one or more additional circuit elements 108 may be provided upstream of the power turbine 74. For instance, the additional circuit element(s) 108 may include an initial heat sink or secondary combustor. The initial heat sink may be configured draw heat from bleed air before reaching the power turbine 74. The secondary combustor may combust a portion of the bleed air, sending combustion gases to the power turbine 74 and driving rotation thereof Air or combustion gases flowing through the power turbine 74 may be returned to the gas turbine engine 12 at, for example, the exhaust section 104.

As shown in FIG. 3, the air compressor 70 and cooling turbine 72 are configured in fluid communication to pass air from the air compressor 70 to the cooling turbine 72, before returning the air to the air compressor 70. Moreover, the ACS 66 includes at least two heat sinks 110, 112 in fluid communication with the air compressor 70 and the cooling turbine 72. The heat sinks may be configured as direct or indirect heat exchangers. One heat sink, an outgoing heat sink 110, is fluidly connected between the air compressor 70 and the cooling turbine 72 (i.e., downstream from the air compressor 70 and upstream from the cooling turbine 72). In optional embodiments, the outgoing heat sink 110 is positioned within a portion of the engine 12. Specifically, the outgoing heat sink 110 is disposed within the FLADE duct 84 to exhaust heat thereto. Additional or alternative embodiments may include the outgoing heat sink 110 in another portion of the aircraft, e.g., at heat sink 42 (see FIG. 1) or engine 12 (e.g., a fuel flow passage or a ram air flow passage). A second heat sink, an incoming heat sink 112, is fluidly connected between the cooling turbine 72 and the air compressor 70 (i.e., downstream from the cooling turbine 72 and upstream from the air compressor 70). The incoming heat sink 112 is disposed in thermal communication with the condenser of the second VCS 46.

During operation of the ACS 66, an initial air flow may be supplied to the air compressor 70 from the engine bleed line 106. Air may then be compressed through the air compressor 70 before passing to the outgoing heat sink 110. At the outgoing heat sink 110, heat may be at least partially exhausted to the environment before the air passes through the cooling turbine 72 and to the incoming heat sink 112. Air flowing across the incoming heat sink 112 may draw additional heat from the second VCS condenser 56 before circulating back to the air compressor 70. Although the illustrated air cycle machine embodiment is described as a largely closed circuit machine, it is envisioned that open circuit embodiments may be provided without deviating from the present disclosure. For instance, an open circuit embodiment (not pictured) may draw air from one more engine bleed lines and or ambient air lines before eventually exhausting the air another portion of the aircraft or the ambient environment. An exemplary open circuit air cycle machine is described in application 14/923,731, herein incorporated by reference.

The ACS 66, first VCS 44, and second VCS 66 may be configured to operate independently or in synchronization with each other. Optionally, the controller 60 may be configured to selectively operate the first VCS compressor(s) 50, the second VCS compressor 54, and the power turbine 74 independently. In certain embodiments, multiple unique operating modes may be provided. In such embodiments, the controller may selectively initiate each mode, e.g., upon receiving a user selected input or determination of a condition-dependent event.

In some embodiments, a synchronized mode and a condition-dependent mode may be provided. In the synchronized mode, the controller 60 may initiate activation of the compressors 50, 54 and/or expansion valves 53, 57, as well as the power turbine 74 at a set flowrate. In the condition-dependent mode, the controller 60 may initiate activation of one or more of the first VCS compressor 50, second VCS compressor 54, first VCS expansion valve 53, second VCS expansion valve 57, and/or power turbine 74 separately according to an input condition.

The input condition may be determined by the controller 60 according to a received input signal. For instance, the input signal may include a temperature signal from one or more temperature sensors (not pictured) of the electronic aircraft components 24. The first VCS compressor 50, second VCS compressor 54, and power turbine 74 may each be activated at a certain temperature signal value or limit. In certain embodiments, the condition-dependent mode may include activating the first compressor 50 at a first temperature signal limit, activating the second compressor 54 at a second temperature signal limit, and activating the power turbine 74 at a third temperature limit. Optionally, the first temperature signal limit may be greater than the second temperature signal limit, and the second temperature signal limit may be greater than the third temperature signal limit.

In additional or alternative embodiments, a temperature target or target range is provided for the electronic aircraft components 24. At elevated temperatures, the first VCS 46 is initially operated to meet the temperature target. In some embodiments, the compressor 50 and expansion valve(s) 53 are matched to coordinate heat transfer from the electronic aircraft components 24. Optionally, fluid may be cycled through the intermediate fluid circuit 65 to transfer heat away from the first VCS 44. If the first VCS 46 is unable to adequately cool the electronic aircraft components 24 (e.g., reduce or maintain the temperature at the electronic aircraft components 24 within a set timeframe), the second VCS 46 may be initiated. Similar to the first VCS 44, the compressor 54 and expansion valve(s) 57 of the second VCS 46 may be matched to coordinate heat transfer from the intercooler 58. In certain embodiments, the controller 60 may be in communication with the expansion valve(s) 57 and include a temperature feedback loop to control the temperature therefrom. The temperature feedback loop may maintain a super heat set point for fluid entering the compressor 54. Moreover, the compressor 50 may be rotated according to the system demands while the compressor 54 is operated to enforce a compressor discharge pressure ceiling of 44. If the first VCS 44 and second VCS 46, in tandem, are unable to adequately cool the aircraft electronic components, the ACS 66 may be further initiated to draw heat from the second VCS 46.

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A thermal management system for an aircraft, the thermal management system comprising:
   a first vapor compression circuit defining a first flowpath for fluid compression, condensation, expansion, and evaporation;
   a second vapor compression circuit defining a second flowpath for fluid compression, condensation, expansion, and evaporation; and
   an intercooler disposed in cascading thermal communication between the first vapor compression circuit and the second vapor compression circuit, wherein heat generated by the aircraft is transferred to the first vapor compression circuit during aircraft operation.
2. The thermal management system of clause 1, further comprising:
   a first compressor disposed within the first flowpath, the first compressor including a discrete motor for driving rotation of the first compressor; and
   a second compressor disposed within the second flowpath, the second compressor including another discrete motor for driving rotation of the second compressor.
3. The thermal management system of any preceding clause, further comprising:
   a controller in operable communication with the first compressor and the second compressor, the controller being configured to independently operate each of the first compressor and the second compressor.
4. The thermal management system of any preceding clause, wherein the first vapor compression circuit includes an evaporator and an expansion valve in fluid series communication with the first compressor, and wherein the second vapor compression circuit includes a condenser and an expansion valve in fluid series communication with the second compressor.
5. The thermal management system of any preceding clause, wherein the aircraft defines an aircraft fluid passage, and wherein the condenser of the second vapor compression circuit is configured in thermal communication with an aircraft fluid passage.
6. The thermal management system of any preceding clause, wherein the intercooler defines a thermal connection to direct at least a portion of the heat generated by the aircraft from the first compression circuit to the second vapor compression circuit.
7. The thermal management system of any preceding clause, further comprising an intermediate fluid circuit to transfer heat from the first vapor compression circuit.
8. The thermal management system of any preceding clause, wherein the aircraft includes an electronic component, and wherein the first vapor compression circuit is disposed in thermal communication with the electronic component.
9. The thermal management system of any preceding clause, further comprising:
   an air cycle system, including a heat sink positioned in thermal communication with the second vapor compression circuit.
10. A thermal management system for an aircraft, the thermal management system comprising:
   a first vapor compression circuit defining a first flowpath for fluid compression, condensation, and expansion, and evaporation;
   a second vapor compression circuit defining a second flowpath for fluid compression, condensation, and expansion and evaporation, the second flowpath being positioned in fluid isolation from the first flowpath;
   an intercooler disposed in cascading thermal communication between the first vapor compression circuit and the second vapor compression circuit, wherein heat generated by the aircraft is transferred to the first vapor compression circuit during aircraft operation; and
   a fluid compression circuit including a heat sink disposed in thermal communication with the second vapor compression circuit.
11. The thermal management system of any preceding clause, further comprising:
   a first compressor disposed within the first flowpath, the first compressor including an electric motor for driving rotation of the first compressor; and
   a second compressor disposed within the second flowpath, the second compressor including an electric motor for driving rotation of the second compressor.
12. The thermal management system of any preceding clause, further comprising:
   a controller in operable communication with the first compressor and the second compressor, the controller being configured to independently operate each of the first compressor and the second compressor.
13. The thermal management system of any preceding clause, wherein the first vapor compression circuit includes an evaporator and an expansion valve in fluid series communication with the first compressor, and wherein the second vapor compression circuit includes a condenser and an expansion valve in fluid series communication with the second compressor.
14. The thermal management system of any preceding clause, wherein the first vapor compression circuit includes an auxiliary condenser in fluid series communication between the first compressor and the expansion valve of the first vapor compression circuit.
15. The thermal management system of any preceding clause, wherein the fluid compression circuit is an air cycle system in cascading thermal communication with the second vapor compression circuit, the air cycle system including an air compressor, a cooling turbine, and a power turbine, wherein the compressor and the cooling turbine are disposed in fluid communication with the heat sink, and wherein the power turbine is operably attached to the air compressor and cooling turbine to drive axial rotation thereof.
16. The thermal management system of any preceding clause, wherein the aircraft defines an aircraft fluid passage, and wherein the condenser of the second vapor compression circuit is configured in thermal communication with an aircraft fluid passage.
17. The thermal management system of any preceding clause, wherein the intercooler defines a thermal connection to direct at least a portion of the heat generated by the aircraft from the first compression circuit to the second vapor compression circuit.
18. The thermal management system of any preceding clause, further comprising an intermediate fluid circuit to transfer heat from the first vapor compression circuit.
19. The thermal management system of any preceding clause, wherein the aircraft includes an electronic component, and wherein the first vapor compression circuit is disposed in thermal communication with the electronic component.
20. An aircraft thermal management system comprising:
   a core turbine engine defining a central axis, the core turbine engine including:
      a shaft extending along the central axis;
      a compressor coupled to the shaft;
      a combustion section positioned downstream of the compressor to receive a compressed fluid therefrom; and
      a turbine positioned downstream of the combustion section and coupled to the shaft to transfer rotation to the compressor;
   an electronic aircraft component operably coupled to the core turbine engine;
   a first vapor compression circuit including an evaporator, a compressor, and an expansion valve in fluid series communication, the evaporator being positioned in thermal communication with the electronic aircraft component;
   a second vapor compression circuit including a compressor, a condenser, and an expansion valve in fluid series communication, the second vapor compression circuit being positioned in thermal communication with the first vapor compression circuit; and
   an intercooler disposed in cascading thermal communication between the first vapor compression circuit and the second vapor compression circuit.

## Claims

1. A thermal management system (20) for an aircraft, the thermal management system (20) comprising:
a first vapor compression circuit (44) defining a first flowpath for fluid compression, condensation, expansion, and evaporation;
a second vapor compression circuit (46) defining a second flowpath for fluid compression, condensation, expansion, and evaporation; and
an intercooler (58) disposed in cascading thermal communication between the first vapor compression circuit (44) and the second vapor compression circuit (46), wherein heat generated by the aircraft is transferred to the first vapor compression circuit (44) during aircraft operation.

2. The thermal management system (20) of claim 1, further comprising:
a first compressor (50) disposed within the first flowpath, the first compressor (50) including a discrete motor (62) for driving rotation of the first compressor (50); and
a second compressor (54) disposed within the second flowpath, the second compressor (54) including another discrete motor (64) for driving rotation of the second compressor (54), wherein the first vapor compression circuit (44) includes an evaporator (48) and an expansion valve (53) in fluid series communication with the first compressor (50), and wherein the second vapor compression circuit (46) includes a condenser (56) and an expansion valve (57) in fluid series communication with the second compressor (54), and wherein the condenser of the second vapor compression circuit (46) is configured in thermal communication with an aircraft fluid passage.

3. The thermal management system (20) of claim 1 or 2, further comprising an intermediate fluid circuit (65) to transfer heat from the first vapor compression circuit (44).

4. The thermal management system (20) of claim 1, 2 or 3, wherein the aircraft includes an electronic component, and wherein the first vapor compression circuit (44) is disposed in thermal communication with the electronic component.

5. The thermal management system (20) of any preceding claim, further comprising:
an air cycle system (66), including a heat sink positioned in thermal communication with the second vapor compression circuit (46).

6. A thermal management system (20) for an aircraft, the thermal management system (20) comprising:
a first vapor compression circuit (44) defining a first flowpath for fluid compression, condensation, and expansion, and evaporation;
a second vapor compression circuit (46) defining a second flowpath for fluid compression, condensation, and expansion and evaporation, the second flowpath being positioned in fluid isolation from the first flowpath;
an intercooler (58) disposed in cascading thermal communication between the first vapor compression circuit (44) and the second vapor compression circuit (46), wherein heat generated by the aircraft is transferred to the first vapor compression circuit (44) during aircraft operation; and
a fluid compression circuit (66) including a heat sink disposed in thermal communication with the second vapor compression circuit (46).

7. The thermal management system (20) of claim 6, further comprising:
a first compressor (50) disposed within the first flowpath, the first compressor (50) including a discrete motor (62) for driving rotation of the first compressor (50), and
a second compressor (54) disposed within the second flowpath, the second compressor (54) including another discrete motor (64) for driving rotation of the second compressor (54), wherein the first vapor compression circuit (44) includes an evaporator (48) and an expansion valve (53) in fluid series communication with the first compressor (50), and wherein the second vapor compression circuit (46) includes a condenser (56) and an expansion valve (57) in fluid series communication with the second compressor (54), and wherein the condenser of the second vapor compression circuit (46) is configured in thermal communication with an aircraft fluid passage.

8. The thermal management system (20) of claim 6 or 7, wherein the fluid compression circuit is an air cycle system (66) in cascading thermal communication with the second vapor compression circuit (46), the air cycle system (20) including an air compressor (70), a cooling turbine (72), and a power turbine (74), wherein the air compressor (70) and the cooling turbine (72) are disposed in fluid communication with a heat sink , and wherein the power turbine (74) is operably attached to the air compressor (70) and cooling turbine (72) to drive axial rotation thereof.

9. The thermal management system (20) of claim 6, 7 or 8, further comprising an intermediate fluid circuit (65) to transfer heat from the first vapor compression circuit (44).

10. The thermal management system (20) of any of claims 6 to 9, wherein the aircraft includes an electronic component (24), and wherein the first vapor compression circuit (44) is disposed in thermal communication with the electronic component (24).
